# EUROPEAN PATENT APPLICATION

(11) **EP 4 541 840 A1**
(43) Date of publication of application: **23.04.2025**
(21) Application number: 23824014.7
(22) Date of filing: 16.06.2023
(51) Int. Cl.: C08J 5/18, C08K 5/57, C08L 27/24

(54) **RESIN SHEET AND MOLDED BODY**

(30) Priority: 17.06.2022 JP 2022098249
(71) Applicant: Sumitomo Bakelite Co., Ltd., Shinagawa-ku Tokyo 140-0002 (JP)
(72) Inventor: KANEHARA, Katsuki, Tokyo 140-0002 (JP)
(74) Representative: Müller-Boré & Partner Patentanwälte PartG mbB
(86) International application number: PCT/JP2023/022463
(87) International publication number: WO 2023/243724

(57) **Abstract**

The present invention provides a resin sheet containing a chlorinated polyvinyl chloride and a dimethyltin-based compound, in which the chlorine content of the chlorinated polyvinyl chloride is 60% by mass or more, and the deflection temperature under load of the resin sheet measured in accordance with a JIS K 7191-1 A method is 80°C or higher.

## Description

### TECHNICAL FIELD

The present invention relates to a resin sheet and a molded body.

### BACKGROUND ART

For example, as shown in Patent Document 1, a resin sheet obtained by molding a vinyl chloride resin composition is applied to interior materials of vehicles such as automobiles, buses, and railways, transportation equipment such as ships and aircraft, buildings, and the like.

Such a vinyl chloride resin composition is preferably used as the interior materials since the vinyl chloride resin composition has excellent workability and further, the obtained resin sheet has excellent impact resistance, chemical resistance, flame retardance, and the like.

In a case where such an interior material is applied particularly to transportation equipment such as an aircraft, it is required to impart flame retardance to the interior material and to suppress smoke generation, and in order to exhibit such functions, it is known that a molybdenum-based compound is added as a flame retardant to the vinyl chloride resin composition.

In addition, the resin sheet is produced, for example, by preparing a vinyl chloride resin composition by kneading under heating, and then molding the obtained vinyl chloride resin composition by extrusion molding.

### Citation List

### Patent Document

Patent Document 1: Japanese Unexamined Patent Application, First Publication No. 2006-265373

### SUMMARY OF INVENTION

### Technical Problem

However, as described above, when the vinyl chloride resin composition contains a molybdenum-based compound, there is a problem that thermal decomposition of the polyvinyl chloride-based resin may be induced by heating during extrusion with an extruder. Therefore, in order to suppress the thermal decomposition of the polyvinyl chloride-based resin, it is considered to add a stabilizer to the vinyl chloride resin composition.

On the other hand, in Europe, the REACH regulation for managing chemical substances to protect human health and the environment is applied. In order to comply with the REACH regulation, it is considered to use a dimethyltin-based compound as a stabilizer. However, when a dimethyltin-based compound is used, there is a problem that the heat resistance (heat deformation temperature) of the resin sheet is lowered.

The present invention has been made in view of the above circumstances, and an object of the present invention is to provide a resin sheet having excellent flame resistance even when a dimethyltin-based compound is contained, and a molded body of the resin sheet.

### Solution to Problem

In order to solve the above-described problems, the present invention adopts the following configurations.
[1] A resin sheet including:
   a chlorinated polyvinyl chloride; and
   a dimethyltin-based compound,
   in which a chlorine content of the chlorinated polyvinyl chloride is 60% by mass or more, and a deflection temperature under load of the resin sheet measured in accordance with a JIS K 7191-1 A method is 80°C or higher.
[2] The resin sheet according to [1], further including:
   a lubricant having a softening point of 50°C or higher.
[3] The resin sheet according to [2],
   in which the lubricant is one or two or more selected from the group consisting of an oxidized polyethylene, a fatty acid ester, and a hydroxy fatty acid.
[4] The resin sheet according to any one of [1] to [3], further including:
   a molybdenum-based compound; and
   magnesium hydroxide.
[5] The resin sheet according to [4],
   in which the molybdenum-based compound is ammonium octamolybdate.
[6] The resin sheet according to any one of [1] to [5],
   in which in the resin sheet, a ratio of an amount of the chlorinated polyvinyl chloride to a total mass of the resin sheet is 70% by mass or more.
[7] The resin sheet according to [2] or [3],
   in which in the resin sheet, a ratio of an amount of the lubricant to 100 parts by mass of an amount of the dimethyltin-based compound is 40 parts by mass to 65 parts by mass.
[8] The resin sheet according to [4] or [5],
   in which in the resin sheet, a ratio of a total amount of the molybdenum-based compound and the magnesium hydroxide to 100 parts by mass of an amount of the chlorinated polyvinyl chloride is 2.0 parts by mass to 10.0 parts by mass.
[9] The resin sheet according to any one of [1] to [8], further including:
   at least one of the group consisting of zeolite and an antioxidant.
[10] A molded body of the resin sheet according to any one of [1] to [9].

### Advantageous Effects of Invention

According to the present invention, there are provided a resin sheet having excellent flame resistance even when a dimethyltin-based compound is contained, and a molded body of the resin sheet.

### BRIEF DESCRIPTION OF DRAWINGS

FIG. 1 is a cross-sectional view schematically showing an example of a resin sheet according to an embodiment of the present invention.
FIG. 2 is a side view schematically showing an example of a production apparatus for the resin sheet shown in FIG. 1.

### DESCRIPTION OF EMBODIMENTS

Hereinafter, the present embodiment will be described in detail with reference to the drawings.

### <<Resin Sheet>>

A resin sheet 1 of the present embodiment contains a chlorinated polyvinyl chloride, and a dimethyltin-based compound, a chlorine content of the chlorinated polyvinyl chloride is 60% by mass or more, and a deflection temperature under load of the resin sheet measured in accordance with a JIS K 7191-1 A method is 80°C or higher.

This resin sheet 1 has excellent flame resistance even when the dimethyltin-based compound is contained.

Hereinafter, as an example of the resin sheet 1 of the present embodiment, a resin sheet containing a chlorinated polyvinyl chloride, a stabilizer, a lubricant, a reinforcing agent, a processing aid, an antioxidant, a filler, and a flame retardant will be described.

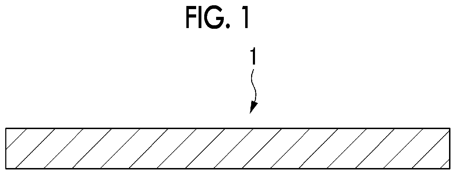

FIG. 1 is a cross-sectional view schematically showing an example of a resin sheet according to an embodiment of the present invention.

### <Chlorinated Polyvinyl Chloride>

The resin sheet 1 contains a chlorinated polyvinyl chloride as a main material thereof. In this manner, the effect of suppressing smoke and heat generation in the resin sheet 1 can be obtained. In addition, in a case where the resin sheet 1 is molded by extrusion molding, the extrusion properties of the resin composition can be improved, and the resin sheet 1 can be molded to have a uniform thickness. Therefore, the obtained resin sheet 1 is molded to have excellent appearance properties.

The chlorinated polyvinyl chloride is a polymer having a plurality of groups represented by -CHCl-CHCl- as a repeating unit.

The chlorine content of the chlorinated polyvinyl chloride, that is, the chlorine concentration rate is set to 60% by mass or more, and is preferably set to 61% by mass or more and 68% by mass or less, and more preferably set to 63% by mass or more and 67% by mass or less. By setting the chlorine content of the chlorinated polyvinyl chloride to be equal to or greater than the above-described lower limit value, the effect of improving heat resistance is obtained. By setting the chlorine content of the chlorinated polyvinyl chloride to be equal to or smaller than the above-described upper limit value, the effect of improving the workability during the preparation of the resin sheet is obtained.

The number average degree of polymerization of the chlorinated polyvinyl chloride is preferably 400 or more and 1200 or less, and more preferably 600 or more and 1000 or less. By setting the number average degree of polymerization of the chlorinated polyvinyl chloride to be equal to or greater than the above-described lower limit value, the heat resistance of the resin sheet 1 can be further improved. By setting the number average degree of polymerization of the chlorinated polyvinyl chloride to be equal to or smaller than the above-described upper limit value, the workability of the resin sheet 1 can be further improved.

In the resin sheet 1, a ratio of the amount of the chlorinated polyvinyl chloride to the total mass of the resin sheet 1 is preferably 70% by mass or more, more preferably 75% by mass or more and 90% by mass or less, and even more preferably 78% by mass or more and 85% by mass or less. In this manner, the effect of containing the chlorinated polyvinyl chloride in the resin sheet 1 can be further improved.

### <Stabilizer>

The resin sheet 1 contains a dimethyltin-based compound as a stabilizer. In this manner, decomposition or coloration of the resin sheet 1 due to heat or light can be suppressed.

In the present specification, the "dimethyltin-based compound" means a compound including a structure in which two methyl groups are covalently bonded to a tin atom.

In Europe, the REACH regulation for managing chemical substances to protect human health and the environment is applied. The dimethyltin-based compound is a compound that complies with the REACH regulation.

In the resin sheet 1, a ratio of the amount of the stabilizer to 100 parts by mass of the amount of the chlorinated polyvinyl chloride is preferably 0.1 parts by mass or more and 10.0 parts by mass or less, and more preferably 0.5 parts by mass or more and 8.0 parts by mass or less. In this manner, decomposition or coloration of the resin sheet 1 due to heat or light can be further suppressed while the mechanical strength of the resin sheet 1 is maintained.

### <Lubricant>

The resin sheet 1 may contain a lubricant. In this manner, a decrease in heat resistance (heat deformation temperature) of the resin sheet 1 due to the dimethyltin-based compound contained in the resin sheet 1 can be further suppressed. In addition, when the resin sheet 1 is molded, excellent sliding properties with respect to a mold, a roller, and the like are exhibited, and thus moldability can be further improved.

The softening point of the lubricant is preferably 50°C or higher, more preferably 60°C or higher, even more preferably 80°C or higher, and particularly preferably 82°C or higher. In this manner, a decrease in the heat resistance of the resin sheet 1 can be further suppressed.

Examples of the lubricant include oxidized polyethylenes, fatty acid esters, hydroxy fatty acids, metal soaps, higher aliphatic alcohols, and synthetic waxes, and among these, one or two or more thereof can be used in combination. Among these, oxidized polyethylenes, fatty acid esters, and hydroxy fatty acids are preferable.

Examples of the type of the oxidized polyethylene include a highly oxidized type, a mildly oxidized type, and an acid-modified type.

The weight average molecular weight of the oxidized polyethylene is preferably 1000 or more and 3000 or less, more preferably 1500 or more and 2500 or less, and even more preferably 1800 or more and 2300 or less. In this manner, the effect of containing the lubricant in the resin sheet 1 can be further improved.

Examples of the fatty acid esters include butyl stearate and triglyceride.

Examples of the hydroxy fatty acids include hydroxy stearic acid.

In the resin sheet 1, a ratio of the amount of the lubricant to 100 parts by mass of the amount of the chlorinated polyvinyl chloride is preferably 0.05 parts by mass or more and 5.00 parts by mass or less, and more preferably 0.30 parts by mass or more and 4.00 parts by mass or less. In this manner, the effect of containing the lubricant in the resin sheet 1 can be further improved.

In the resin sheet 1, a ratio of the amount of the lubricant to 100 parts by mass of the amount of the dimethyltin-based compound is preferably 40 parts by mass to 65 parts by mass, more preferably 41 parts by mass to 55 parts by mass, and even more preferably 43 parts by mass to 52 parts by mass. In this manner, the effect of containing the lubricant in the resin sheet 1 can be further improved.

The addition of the lubricant to the resin sheet 1 can be omitted depending on the combination of the constituent materials included in the resin sheet 1.

### <Reinforcing Agent>

The resin sheet 1 may contain a reinforcing agent. In this manner, the impact resistance of the resin sheet 1 can be further improved, and the moldability of the resin sheet 1 during molding can be further improved.

Examples of the reinforcing agent include chlorinated polyethylenes, ethylene-vinyl acetate copolymers, and multi-component acrylic rubber-based resins, and among these, multi-component acrylic rubber-based resins are preferably used. In this manner, the durability of the resin sheet 1 can be further improved.

The multi-component acrylic rubber-based resins (acrylic polymers) are mainly composed of acrylic acid esters such as methyl acrylate, ethyl acrylate, butyl acrylate, and octyl acrylate, and are copolymers of these monomers with 2-chloroethyl vinyl ether, methyl vinyl ketone, acrylic acid, styrene, acrylonitrile, and butadiene. For example, "KANE ACE FM" manufactured by Kaneka Corporation and "KUREHA KM-334" manufactured by Kureha Corporation may be used.

The weight average molecular weight of the multi-component acrylic rubber-based resin is preferably 1.0 × 10⁵ or more and 1.0 × 10⁷ or less, and more preferably 1.0 × 10⁶ or more and 7.0 × 10⁶ or less.

In the resin sheet 1, a ratio of the amount of the multi-component acrylic rubber-based resin to 100 parts by mass of the amount of the chlorinated polyvinyl chloride is preferably 5.0 parts by mass or more and 20.0 parts by mass or less, and more preferably 6.0 parts by mass or more and 14.0 parts by mass or less. In this manner, the impact resistance of the resin sheet 1 can be further improved.

The addition of the reinforcing agent to the resin sheet 1 can also be omitted depending on the impact resistance required for the interior material to which the resin sheet 1 is applied.

### <Processing Aid>

The resin sheet 1 may contain a processing aid. In this manner, the moldability of the resin sheet 1 during molding can be further improved.

As the processing aid, for example, an acrylic processing aid is used, and specific examples thereof include an acrylic acid ester copolymer (for example, a high molecular weight copolymer of an acrylic acid ester) such as a 2-ethylhexyl acrylate-butyl acrylate copolymer, and a copolymer of methyl methacrylate and an acrylic acid ester.

The weight average molecular weight of the processing aid is preferably 1.0 × 10⁵ or more and 5.0 × 10⁶ or less, more preferably 7.0 × 10⁵ or more and 4.0 × 10⁶ or less, and even more preferably 1.3 × 10⁶ or more and 3.0 × 10⁶ or less.

In the resin sheet 1, a ratio of the amount of the processing aid to 100 parts by mass of the amount of the chlorinated polyvinyl chloride is preferably 1.0 parts by mass or more and 15.0 parts by mass or less, and more preferably 2.0 parts by mass or more and 10.0 parts by mass or less. In this manner, the moldability of the resin sheet 1 during molding can be further improved.

The addition of the processing aid to the resin sheet 1 can be omitted depending on the combination of the constituent materials included in the resin sheet 1 and the like.

### <Antioxidant>

The resin sheet 1 may contain an antioxidant. In this manner, the oxidation of the constituent materials included in the resin sheet 1 can be further prevented.

In addition, when the resin composition contains a molybdenum-based compound, there is a concern that thermal decomposition of the chlorinated polyvinyl chloride is induced by heating during extrusion with an extruder. On the other hand, when the antioxidant is contained in the resin sheet 1, the induction of thermal decomposition of the chlorinated polyvinyl chloride can be further suppressed.

Examples of the antioxidant include phosphite-based antioxidants (phosphorus-based antioxidants) such as trisnonylphenyl phosphite, tridecyl phosphite, and diphenyldecyl phosphite; hindered phenol-based antioxidants; phenol-based antioxidants such as alkylated monophenol and alkylated hydroquinone; and amine-based antioxidants such as alkylated tert-butylphenylene diamine and hydroxylamine. Among these, one or two or more thereof can be used in combination. Among these, phosphite-based antioxidants and phenol-based antioxidants are preferable. In this manner, the effect of containing the antioxidant in the resin sheet 1 can be further improved.

### Examples of the hindered phenol-based antioxidants include 2,2'-methylenebis(4-methyl-6-tert-butylphenol) and pentaerythritol=tetrakis[3-(3',5'-di-tert-butyl-4'-hydroxyphenyl)propionate].

In the resin sheet 1, a ratio of the amount of the antioxidant to 100 parts by mass of the amount of the chlorinated polyvinyl chloride is preferably 0.01 parts by mass or more and 5.0 parts by mass or less, more preferably 0.1 parts by mass or more and 2.0 parts by mass or less, and even more preferably 0.3 parts by mass or more and 1.5 parts by mass or less. In this manner, the induction of thermal decomposition of the chlorinated polyvinyl chloride can be further suppressed.

The addition of the antioxidant to the resin sheet 1 can be omitted depending on the combination of the constituent materials included in the resin sheet 1 and the like.

### <Zeolite>

The resin sheet 1 may contain zeolite. When the resin composition contains a molybdenum-based compound, there is a concern that thermal decomposition of the chlorinated polyvinyl chloride is induced by heating during extrusion with an extruder. On the other hand, since the resin sheet 1 contains zeolite, the induction of thermal decomposition of the chlorinated polyvinyl chloride can be further suppressed.

The zeolite is not particularly limited, and examples thereof include natural zeolites such as chabazite, mordenite, erionite, and clinoptilolite, and synthetic zeolites such as A-type zeolite, X-type zeolite, and Y-type zeolite. Among these, one or two or more thereof can be used in combination.

The zeolite is contained in the resin sheet 1 in a form of particles. The average particle diameter of the particles is not particularly limited, and is, for example, preferably set to about 1.0 µm or more and 50.0 µm or less and more preferably set to about 5.0 µm or more and 30.0 µm or less. In this manner, in the resin sheet 1, the zeolite can be more uniformly dispersed without being aggregated.

In the present specification, the term "average particle diameter" means a particle diameter at 50% accumulation point of the particles, and may be referred to as "D50".

In the present specification, the particle diameter of a particle having a shape other than a spherical shape is determined by a laser diffraction/scattering-type particle diameter distribution measurement method.

The shape of the particles containing the zeolite is not particularly limited, and may be any of a spherical shape, an elliptical shape, a flat shape, a needle shape, or the like.

In the resin sheet 1, a ratio of the amount of the zeolite to 100 parts by mass of the amount of the chlorinated polyvinyl chloride is preferably 0.1 parts by mass or more and 5.0 parts by mass or less, and more preferably 0.2 parts by mass or more and 1.0 part by mass or less. In this manner, the induction of thermal decomposition of the chlorinated polyvinyl chloride can be further suppressed.

The addition of the zeolite to the resin sheet 1 can be omitted depending on the combination of the constituent materials included in the resin sheet 1.

The resin sheet 1 preferably contains at least one of zeolite or an antioxidant. In addition, as in the present embodiment, by adopting a configuration in which both zeolite and an antioxidant are added to the resin sheet 1, the induction of thermal decomposition of the chlorinated polyvinyl chloride can be further suppressed.

### <Flame Retardant>

The resin sheet 1 may contain a flame retardant. In this manner, the flame retardance of the resin sheet 1 can be further improved, and the combustion of the resin sheet 1 can be further suppressed, so that safety thereof can be further improved.

Examples of the flame retardant include antimony-based compounds such as antimony trioxide; metal hydroxides such as aluminum hydroxide and magnesium hydroxide; phosphorus-based compounds such as cresyl diphenyl phosphate, trichloroethyl phosphate, trichloropropyl phosphate, and trisdichloropropyl phosphate; nitrogen-containing compounds such as melamine-based compounds and guanidine-based compounds; and halogen-based compounds such as chlorinated paraffin. Among these, one or two or more thereof can be used in combination.

Further, the resin sheet 1 may contain a molybdenum-based compound in addition to the above-described flame retardant. In this manner, the low toxic gas properties of the resin sheet 1 are realized by further improving the flame retardance of the resin sheet 1, and further suppressing the smoke generation of the resin sheet 1, and the safety thereof can be further improved.

In the present specification, the "molybdenum-based compound" means a compound containing molybdenum as a constituent element.

Similarly, the "antimony-based compound" means a compound containing antimony as a constituent atom, the "phosphorus-based compound" means a compound containing phosphorus as a constituent element, and the "halogen-based compound" means a compound containing a halogen as a constituent element.

The resin sheet 1 preferably contains a molybdenum-based compound and magnesium hydroxide as flame retardants. In this manner, the flame retardance of the resin sheet 1 can be further improved.

In the resin sheet 1, a ratio of the amount of the flame retardant to 100 parts by mass of the amount of the chlorinated polyvinyl chloride is preferably 0.1 parts by mass or more and 20.0 parts by mass or less, and more preferably 0.5 parts by mass or more and 8.0 parts by mass or less. In this manner, the flame retardance of the resin sheet 1 can be further improved.

The molybdenum-based compound is contained in the resin sheet 1 in a form of particles, and more specifically, the molybdenum-based compound is contained in a form of primary particles of the molybdenum-based compound or secondary particles including primary particles of another flame retardant other than the molybdenum-based compound. The average particle diameter of the particles is not particularly limited, and is, for example, preferably set to about 1.0 µm or more and 50.0 µm or less and more preferably set to about 3.0 µm or more and 15.0 µm or less. In this manner, in the resin sheet 1, the molybdenum-based compound can be more uniformly dispersed without being aggregated.

The shape of the particles containing the molybdenum-based compound is not particularly limited, and may be any of a spherical shape, an elliptical shape, a flat shape, a needle shape, or the like. In the present specification, the particle diameter of the particles refers to the maximum diameter of the particles having each shape, and for example, in a case of forming a spherical shape, the particle diameter refers to the diameter.

The molybdenum-based compound is not particularly limited, and examples thereof include inorganic molybdenum-based compounds such as molybdenum trioxide, zinc molybdate, ammonium molybdate, magnesium molybdate, calcium molybdate, barium molybdate, sodium molybdate, potassium molybdate, molybdenum disulfide, and molybdenum nitride; and organic molybdenum-based compounds such as dialkyldithiomolybdate. Among these, one or two or more thereof can be used in combination. Among these, ammonium molybdate, zinc molybdate, and molybdenum trioxide are preferable, and ammonium molybdate is more preferable.

Examples of the ammonium molybdate include ammonium octamolybdate and ammonium heptamolybdate, and among these, one or two or more thereof can be used in combination. Among these, ammonium octamolybdate is preferable. In this manner, the effect of containing the molybdenum-based compound in the resin sheet 1 can be further improved.

The particles containing the molybdenum-based compound may be linked to a coupling agent containing a hydrocarbon group on the surface thereof.

As the coupling agent, for example, a silane-based coupling agent, a titanium-based coupling agent, an aluminum-based coupling agent, or the like can be used.

In the resin sheet 1, a ratio of the total amount of the molybdenum-based compound and the magnesium hydroxide to 100 parts by mass of the amount of the chlorinated polyvinyl chloride is preferably 2.0 parts by mass or more and 10.0 parts by mass or less, more preferably 2.5 parts by mass or more and 8.0 parts by mass or less, and even more preferably 3.0 parts by mass or more and 5.0 parts by mass or less. In this manner, the smoke generation of the resin sheet 1 can be further suppressed.

The addition of the flame retardant to the resin sheet 1 can also be omitted depending on the application of the interior material to which the resin sheet 1 is applied, that is, depending on the flame retardant properties required for the resin sheet 1.

### <Pigment>

The resin sheet 1 may contain a pigment as a coloring material.

The pigment is selected according to the required coloration (color tone), and examples thereof include organic pigments such as titanium oxide, carbon black, azo-based pigments, benzimidazolone-based pigments, diarylide-based pigments, quinacridone-based pigments, isoindolinone-based pigments, vat-based pigments, phthalocyanine-based pigments, and dioxane-based pigments, and inorganic pigments such as titanium yellow and chrome yellow, and among these, one or two or more thereof can be used in combination.

In the resin sheet 1, a ratio of the amount of the pigment with respect to 100 parts by mass of the amount of the chlorinated polyvinyl chloride is set according to the required coloration (color tone), and is preferably 0.01 parts by mass or more and 8.00 parts by mass or less, and more preferably 0.05 parts by mass or more and 6.00 parts by mass or less. In this manner, the effect of containing the pigment in the resin sheet 1 can be further improved.

In the resin sheet 1, the primary particles of the molybdenum-based compound and the secondary particles containing the molybdenum-based compound have a white color. Therefore, in a case where the resin sheet 1 contains a colored pigment, a spotted pattern caused by the particles containing the molybdenum-based compound is more significantly visually recognized, and thus, in such a case, the resin sheet 1 according to the present invention is more suitably applied.

The addition of the pigment to the resin sheet 1 can be omitted in a case where the resin sheet 1 does not need to be colored.

The resin sheet 1 may contain, for example, an ultraviolet absorber, a plasticizer, an antistatic agent, and the like, in addition to the above-described chlorinated polyvinyl chloride, stabilizer, lubricant, reinforcing agent, processing aid, antioxidant, zeolite, flame retardant, and pigment.

The thickness of the resin sheet 1 is preferably set to 0.5 mm or more and 8.0 mm or less, and more preferably set to 1.0 mm or more and 5.0 mm or less. In this manner, the strength of the resin sheet 1 can be further improved while further reducing the weight of the resin sheet 1.

The resin sheet 1 exhibits heat resistance as shown below.

That is, the deflection temperature under load of the resin sheet 1 measured in accordance with the JIS K 7191-1 A method is 80°C or higher. In this manner, the resin sheet 1 has excellent heat resistance even in a case where the resin sheet contains the dimethyltin-based compound.

The deflection temperature under load of the resin sheet 1 is preferably 75°C or higher and 100°C or lower, more preferably 76°C or higher and 95°C or lower, and even more preferably 78°C or higher and 90°C or lower.

In addition, the resin sheet 1 preferably exhibits flame retardance as shown below.

That is, when the resin sheet 1 is burned in accordance with the heat release test specified in ASTM E906, the maximum heat release rate measured within 5 minutes after ignition of the resin sheet 1 is preferably 65 kW/m² or less and more preferably 55 kW/m² or less. In this manner, the flame retardance of the resin sheet 1 can be further improved.

In addition, the total heat generation amount in 2 minutes after ignition of the resin sheet 1 is preferably 65 kW·min/m² or less and more preferably 55 kW·min/m² or less. In this manner, the flame retardance of the resin sheet 1 can be further improved.

Further, in the smoke generation test specified in ASTM E662, that is, the smoke generation concentration test during burning using an NBS smoke chamber, the smoke generation concentration (Ds) during burning for 4.0 minutes is preferably 200 or less and more preferably 150 or less. In this manner, the generation of smoke from the resin sheet 1 can be further suppressed.

The resin sheet 1 can be produced, for example, as follows.

### <<Method for Producing Resin Sheet>>

First, a production apparatus 10 used for producing the resin sheet 1 will be described before describing a method for producing the resin sheet 1.

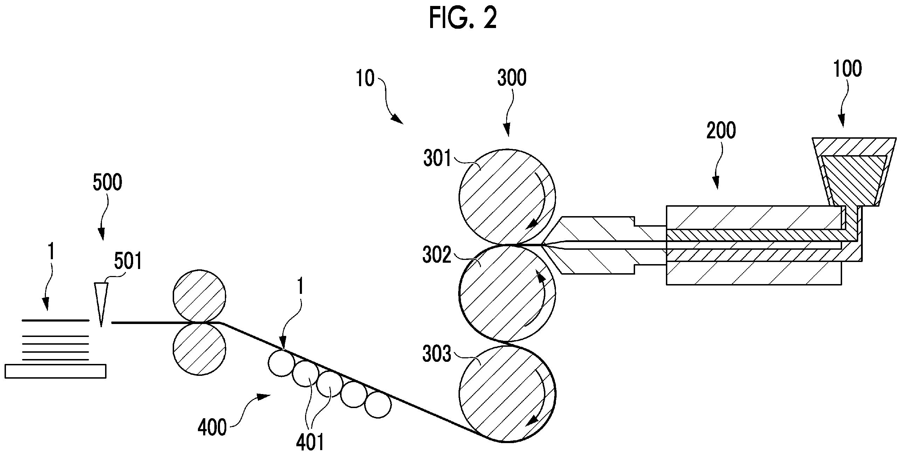

FIG. 2 is a side view schematically showing an example of a production apparatus for the resin sheet shown in FIG. 1. In FIG. 2, a part is shown in an exaggerated manner, and is significantly different from the actual dimension.

The resin sheet 1 having a flat plate shape shown in FIG. 1 is produced by molding a resin composition containing a chlorinated polyvinyl chloride and a dimethyltin-based compound using the production apparatus 10.

As shown in FIG. 2, the production apparatus 10 includes a supply unit 100, an extruder 200, a molding unit 300, a cooling unit 400, and a cutting unit 500.

The supply unit 100 stores a resin composition and supplies the stored resin composition to the extruder 200. In the supply unit 100, the resin composition is stored in a state of being mixed (kneaded).

The extruder 200 extrudes the resin composition supplied from the supply unit 100 as a sheet by an extrusion method. The extruder 200 has a flow channel through which the resin composition passes and a screw provided in the flow channel. As the screw rotates, the resin composition is extruded as a sheet.

Here, when the resin composition is extruded by the extruder 200, the resin composition is heated by temperature setting of an extruder barrel (cylinder) provided in the extruder 200 and rotation of the screw. In this manner, the resin composition supplied from the supply unit 100 to the extruder 200 is continuously heated. The resin composition is usually heated at a heating temperature of about 120°C or higher and 200°C or lower, and in a case where a higher temperature is set, the resin composition is heated at a heating temperature of about 170°C or higher and 200°C or lower.

In the present embodiment, the molding unit 300 has three rollers 301, 302, and 303. The rollers 301 to 303 are disposed in a vertical direction and are configured to rotate independently of each other. The extruded sheet material is wound around these rollers 301 to 303, and the sheet material is sandwiched between the rollers 301 to 303 to be molded into a uniform thickness.

The cooling unit 400 has a plurality of cooling rollers 401. Each cooling roller 401 comes into contact with one surface of the molded sheet and thus the sheet is cooled.

The cutting unit 500 has a blade portion 501 and cuts the sheet into a predetermined length with the blade portion 501.

Using such a production apparatus 10, for example, the resin sheet 1 can be produced as follows.
[1] First, a dimethyltin-based compound is added to a powder containing chlorinated polyvinyl chloride, as necessary, one or two or more selected from the group consisting of a stabilizer, a lubricant, a reinforcing agent, a processing aid, an antioxidant, zeolite, and a flame retardant are further added thereto, and then the mixture is kneaded using a super mixer, a Henschel mixer, a blender, or the like to prepare a resin composition.
[2] Next, the prepared resin composition is molded using the production apparatus 10 to obtain the resin sheet 1.

In the production method using the above-described production apparatus 10, a sheet material of the resin composition supplied from the supply unit 100 is continuously extruded by the extruder 200, the surface is flattened by the molding unit 300, and the sheet material is molded to have a predetermined thickness. Then, the resin sheet 1 is cooled by coming into contact with the cooling unit 400 and is cut into a predetermined length by the cutting unit 500.

In the present embodiment, although the cut sheet is described as the resin sheet 1, the cutting of the sheet may be omitted, and the resin sheet 1 may be a sheet wound in a roll shape.

In addition, in the production apparatus 10, the rollers 301, 302, and 303 may be provided with a cooling function, and the molding unit 300 may function as a cooling unit.

By molding the resin composition with the production apparatus 10 as described above, the resin sheet 1 can be stably obtained.

### <<Molded Body>>

The molded body of the present embodiment is a molded body of the resin sheet 1. The molded body is obtained by thermally molding (vacuum molding) the resin sheet 1 to form any shape.

The resin sheet 1 and the molded body thereof can be applied to interior materials of vehicles such as automobiles, buses, and railways, transportation equipment such as ships and aircrafts, and spaceships, buildings, and the like, and particularly, since the smoke generation is suppressed, the resin sheet 1 and the molded body thereof are preferably used as an interior material for transportation equipment that requires higher safety.

Hereinabove, the resin sheet, the method for producing the resin sheet, and the molded body of the resin sheet according to the present invention have been described, but the present invention is not limited thereto, and any constituent may be added to the resin composition.

### Examples

Hereinafter, the present embodiment will be described in more detail based on Examples.

### 1. Preparation of Raw Materials

The following materials were prepared as raw materials for preparing the resin composition.

### (Chlorinated Polyvinyl Chloride (CPVC))

· Chlorinated polyvinyl chloride ("H-516A", manufactured by Kaneka Corporation, chlorine concentration: 65%, degree of polymerization: 800)

### (Stabilizer)

· Dimethyltin-based compound ("AT-1500", manufactured by Nitto Kasei Co., Ltd., dimethyltin mercapto)

### (Lubricant)

· Hydroxy fatty acid ("Loxiol G 32", manufactured by Emery Oleochemicals)
· Hydroxy fatty acid ("Loxiol G 21", manufactured by Emery Oleochemicals)
· Polymer complex ester ("VPN963", manufactured by Emery Oleochemicals)
· Oxidized polyethylene ("A-C629A", manufactured by Honeywell International, Inc.)
· Oxidized polyethylene ("HW 220MP"; manufactured by Mitsui Chemicals, Inc., slightly oxidized, molecular weight: 2000)

### (Reinforcing Agent)

· Acrylic (MMA/BA/EA) polymer ("FM-50", manufactured by Kaneka Corporation)

### (Processing Aid)

· Acrylic (MMA/BA) polymer ("PA-20", manufactured by Kaneka Corporation; molecular weight: small)
· Acrylic (MMA/BA) polymer ("PA-40", manufactured by Kaneka Corporation; molecular weight: medium)

### (Antioxidant)

· Phenol-based antioxidant (hindered phenol-based antioxidant, "Irganox 1010", manufactured by BASF Japan Ltd.)

### (Zeolite)

· Zeolite ("GLS-1000", manufactured by Tosoh Corporation)

### (Flame Retardant)

· Magnesium hydroxide ("KISUMA 5J", manufactured by Kyowa Chemical Industry Co., Ltd.)
· Molybdenum-based compound ("AMO-W", manufactured by Climax Molybdenum Company, ammonium octamolybdate)

### 2. Production of Resin Sheet

### [Example 1]

[1] First, for the raw materials shown in Table 1 among the above-described raw materials, a resin composition was prepared by stirring and mixing the raw materials in a super mixer in parts by mass shown in Table 1 while raising the temperature to 100°C, and then cooling the mixture to 30°C.
[2] Next, the prepared resin composition was stored in the extruder 200 provided in the production apparatus 10 shown in FIG. 2 and extruded to obtain a sheet in a molten state. Then, the sheet in the molten state was wound around the rollers 301 to 303, sandwiched between the rollers, flattened, and then cooled by the cooling unit 400. Then, a resin sheet 1 having a thickness of 2.0 mm was obtained by cutting the resin sheet 1 at a predetermined length by the cutting unit 500.

### [Example 2 and Comparative Example 1]

Resin sheets 1 of Example 2 and Comparative Example 1 were obtained in the same manner as in Example 1, except that in the step [1], the parts by mass of each of the raw materials used in the preparation of the resin composition and the parts by mass of each of the raw materials contained in the resin composition were set as shown in Table 1.

### 3. Evaluation of Heat Resistance of Resin Sheet

The heat resistance of the resin sheets of each of Examples and Comparative Example was evaluated by the following method.

### <Deflection Temperature Under Load>

For the resin sheets of each of Examples and Comparative Example, the deflection temperature under load was measured according to the following method.

According to ISO 75-1, the deflection temperature under load (unit: °C) was measured under the conditions (A method) with a load of 1.80 MPa using an HDT test apparatus.

As a deflection temperature under load (HDT) test apparatus, "6M-2" (trade name) manufactured by Toyo Seiki Seisaku-sho, Ltd. was used.

The evaluation results of the resin sheets of each of Examples and Comparative Example obtained as described above are respectively shown in Table 1 below.

**[Table 1]**

| | Content | Softening point (°C) | Example 1 | Example 2 | Comparative Example 1 |
|---|---|---|---|---|---|
| Chlorinated polyvinyl chloride | Chlorinated polyvinyl chloride | | 100 | 100 | 100 |
| Stabilizer | Dimethyltin-based compound (dimethyltin mercapto) | | 3.5 | 3.5 | 4.5 |
| Lubricant | Hydroxy fatty acid (Loxiol G 32) | 52 | | 1 | 3 |
| | Hydroxy fatty acid (Loxiol G 21) | 79 | | 0.2 | 0.2 |
| | Fatty acid ester (VPN 963) | 80 | | 0.25 | 0.5 |
| | Oxidized polyethylene (A-C629A) | 88 | 1.5 | | |
| | Oxidized polyethylene (HW 220MP) | 110 | 0.2 | | |
| Reinforcing agent | Acrylic (MMA/BA/EA) polymer | | 10 | 10 | 7 |
| Processing aid | Acrylic (MMA/BA) polymer (molecular weight small) | | 2 | 2 | 4 |
| | Acrylic (MMA/BA) polymer (molecular weight medium) | | 2 | 2 | |
| Antioxidant | Phenol-based antioxidant | | 1 | 1 | 0.2 |
| Zeolite | Zeolite | | 0.5 | 0.5 | 0.1 |
| Flame retardant | Magnesium hydroxide | | 3 | 3 | 3 |
| | Molybdenum-based compound (ammonium octamolybdate) | | 2.5 | 2.5 | 2.5 |
| Evaluation | Deflection temperature under load (°C) | | 85 | 81 | 74 |

Since the resin sheets of Examples 1 and 2 and Comparative Example 1 contain a dimethyltin-based compound, the resin sheets satisfy the REACH regulation.

In addition, it was confirmed that the deflection temperature under load of the resin sheets of Examples 1 and 2 was 80°C or higher, and thus the resin sheets had excellent heat resistance.

On the other hand, it was confirmed that the deflection temperature under load of the resin sheet in Comparative Example 1 was lower than 80°C, and thus the resin sheet did not have sufficient heat resistance.

### INDUSTRIAL APPLICABILITY

The present invention can provide a resin sheet having excellent flame resistance even when a dimethyltin-based compound is contained, and a molded body of the resin sheet.

### REFERENCE SIGNS LIST

1 Resin sheet
10 Production apparatus
100 Supply unit
200 Extruder
300 Molding unit
301 Roller
302 Roller
303 Roller
400 Cooling unit
401 Roller
500 Cutting unit
501 Blade portion

## Claims

1. A resin sheet comprising:
a chlorinated polyvinyl chloride; and
a dimethyltin-based compound,
wherein a chlorine content of the chlorinated polyvinyl chloride is 60% by mass or more, and
a deflection temperature under load of the resin sheet measured in accordance with a JIS K 7191-1 A method is 80°C or higher.

2. The resin sheet according to Claim 1, further comprising:
a lubricant having a softening point of 50°C or higher.

3. The resin sheet according to Claim 2,
wherein the lubricant is one or two or more selected from the group consisting of an oxidized polyethylene, a fatty acid ester, and a hydroxy fatty acid.

4. The resin sheet according to Claim 1 or 2, further comprising:
a molybdenum-based compound; and
magnesium hydroxide.

5. The resin sheet according to Claim 4,
wherein the molybdenum-based compound is ammonium octamolybdate.

6. The resin sheet according to Claim 1 or 2,
wherein in the resin sheet, a ratio of an amount of the chlorinated polyvinyl chloride to a total mass of the resin sheet is 70% by mass or more.

7. The resin sheet according to Claim 2 or 3,
wherein in the resin sheet, a ratio of an amount of the lubricant to 100 parts by mass of an amount of the dimethyltin-based compound is 40 parts by mass to 65 parts by mass.

8. The resin sheet according to Claim 4,
wherein in the resin sheet, a ratio of a total amount of the molybdenum-based compound and the magnesium hydroxide to 100 parts by mass of an amount of the chlorinated polyvinyl chloride is 2.0 parts by mass to 10.0 parts by mass.

9. The resin sheet according to Claim 1 or 2, further comprising:
at least one of the group consisting of zeolite and an antioxidant.

10. A molded body of the resin sheet according to Claim 1 or 2.
